# FASCICULE DE BREVET EUROPEEN

(11) **EP 2 457 826 B1**
(45) Date de publication et mention de la délivrance du brevet: **27.01.2016**
(21) Numéro de dépôt: 11008816.8
(22) Date de dépôt: 07.11.2011
(51) Int. Cl.: B64C 27/00, B64D 25/18, B64C 25/54

(54) **Procédé de commande d'un système de flottabilité pour aéronef et système de flottabilité mettant en oeuvre ledit procédé, et aéronef**
Steuerverfahren eines Schwimmauftriebssystems für Luftfahrzeug, und Schwimmauftriebssystem, bei dem dieses Verfahren umgesetzt wird, sowie entsprechendes Luftfahrzeug
Method for controlling a buoyancy system for an aircraft and buoyancy system implementing said method, and aircraft

(30) Priorité: 25.11.2010 FR 1004587
(43) Date de publication de la demande: 30.05.2012
(73) Titulaire: Airbus Helicopters, 13725 Marignane Cedex (FR)
(72) Inventeur: Certain, Bernard, 13090 Aix en Provence (FR); Delorme, Louis, 13002 Marseille (FR); Filias, François-Xavier, 13330 Pelissanne (FR)
(74) Mandataire: Pouillot, Laurent Pierre Paul

(56) Documents cités:
- WO-A2-2006/046038
- WO-A2-2008/054401
- US-A1- 2004 226 498
- US-B1- 7 644 739

## Description

La présente invention se rapporte au domaine technique général des systèmes de sécurité pour aéronefs et notamment pour les aéronefs du genre giravions, par exemple des hélicoptères.

La présente invention concerne plus particulièrement un système de flottabilité de secours et son procédé de commande, ainsi que l'aéronef associé. Un tel système de flottabilité de secours assure la flottaison et la stabilité d'un aéronef lors d'un amerrissage forcé, pour permettre l'évacuation des occupants de cet aéronef. Tous les appareils voués aux missions de transport de personnes en zones maritimes sont équipés en principe d'un tel système de flottabilité.

Un système de flottabilité de secours comprend des flotteurs dont le déploiement est commandé soit par le pilote et/ou le copilote, soit par déclenchement automatique, notamment grâce à un détecteur d'immersion. Ces flotteurs peuvent comprendre des outres gonflées par un moyen de déploiement explosif ou électrique par exemple.

Sur les appareils actuels, le système de flottabilité de secours se déclenche manuellement en vol ou lors d'un contact ou d'un choc avec l'eau. Le système de flottabilité doit au préalable être armé à l'aide d'un bouton de commande en cas de survol maritime combiné à une vitesse d'avancement inférieure à la vitesse établie comme vitesse maximum pour le bon déploiement des flotteurs. Un voyant poussoir s'allume suite à l'armement du système de flottabilité, pour indiquer que ce dernier est opérationnel. Tant que le système de flottabilité n'est pas armé, une erreur de manipulation sur le manche de commande ne peut donc pas déclencher le gonflement des flotteurs.

Une impulsion sur le voyant poussoir ou sur un bouton poussoir de la poignée du manche de commande permet de déclencher manuellement le déploiement des flotteurs.

Si l'équipage se trouve dans l'incapacité d'actionner manuellement le système de flottabilité, le déploiement des flotteurs est déclenché automatiquement grâce aux détecteurs d'immersions.

Par ailleurs, on connaît par l'intermédiaire du document WO 2008/054401, un système permettant de gonfler des coussins gonflables anti-crash, en tenant compte de l'attitude de l'aéronef et d'une vitesse excessive d'approche du sol.

On connaît aussi, par l'intermédiaire du document US 7,156,033 B2, un système de flottabilité associé à un moyen d'inhibition.

Le document FR 1 383 688 présente un hélicoptère muni de flotteurs gonflables.

Le document CA 2481789 suggère l'utilisation d'un capteur d'immersion associé à un capteur d'accélération pour déclencher le gonflement d'un flotteur.

Les systèmes de flottabilité de secours connus sont intéressants. Toutefois, des gonflements intempestifs et non souhaités des flotteurs peuvent se produire en vol, par exemple en raison d'une forte humidité. Un déploiement intempestif des flotteurs induit une immobilisation de fait gênante de l'aéronef pour au minimum vérifier le système de flottabilité de secours.

L'objet de la présente invention vise à fournir un nouveau procédé de commande d'un système de flottabilité de sécurité limitant voire annulant le risque d'un déclenchement intempestif, ainsi que le système de flottabilité de sécurité et l'aéronef associés.

La présente invention a alors pour objet de proposer un dispositif permettant de s'affranchir des limitations mentionnées ci-dessus.

L'invention vise donc un procédé de commande d'un système de flottabilité pour aéronef, ce système de flottabilité comportant au moins un flotteur et un moyen de déploiement du flotteur, tel qu'un moyen de déploiement comprenant un organe de déploiement pour déployer au moins un flotteur en le gonflant par exemple. Ce système de flottabilité comprend un moyen d'armement pour activer le moyen déploiement du flotteur, le système de flottabilité ayant au moins deux capteurs d'immersion pour donner un ordre de déploiement automatique dudit flotteur au moyen de déploiement.

Selon ce procédé, le moyen de déploiement déploie chaque flotteur lorsque d'une part le moyen d'armement active le moyen de déploiement et lorsque d'autre part un événement contenu dans une liste préétablie se produit, cette liste comportant au moins les événements suivants :
- les deux capteurs d'immersion signalent une immersion au moyen de déploiement en lui envoyant l'ordre de déploiement,
- le moyen de déploiement reste activé à l'issue d'un temps prédéterminé, le temps prédéterminé s'écoulant lorsqu'un unique capteur d'immersion signale une immersion en envoyant ledit ordre de déploiement.

Ainsi, le déploiement de chaque flotteur pour assurer la flottaison de l'aéronef n'est possible que lorsque le moyen d'armement est volontairement sollicité par un individu, un pilote par exemple.

De plus, on s'assure que l'ordre de déploiement reçu par le moyen de déploiement n'a pas été indûment donné.

Ainsi, le déploiement automatique du ou des flotteur(s) est réalisé immédiatement uniquement si l'ordre de déploiement a été donné par au moins deux capteurs d'immersion. L'invention ne suggère pas de simplement redonder des capteurs d'immersion pour s'affranchir d'une défaillance d'un capteur d'immersion, mais considère que le déploiement n'est entrepris que si deux capteurs d'immersion signalent une immersion, le déploiement étant au moins retardé si un unique capteur d'immersion signale une immersion.

En effet, si un seul capteur d'immersion signale une immersion, ce capteur donnant l'ordre de déploiement est peut être défectueux. Dès lors, le déploiement du ou des flotteur(s) ne devient effectif qu'à l'issue d'un temps prédéterminé, afin de laisser la possibilité au pilote d'annuler l'ordre de déploiement par exemple.

L'annulation d'un ordre de déploiement peut être obtenue par un désarmement du moyen de déploiement, en manoeuvrant le moyen d'armement à cet effet.

Par suite, l'invention limite voire supprime les risques de déploiement intempestif d'un flotteur, le déploiement d'un flotteur n'étant réalisé que dans des situations limitées.

Le procédé peut de plus comporter une ou plusieurs des caractéristiques qui suivent.

Par exemple, le système de flottabilité peut éventuellement comprendre un moyen manuel pour donner un ordre de déploiement du flotteur au moyen de déploiement sur requête manuelle d'un individu, et au moins deux capteurs d'immersion pour donner un ordre de déploiement automatique dudit flotteur au moyen de déploiement.

Le moyen de déploiement peut alors déployer chaque flotteur lorsque d'une part le moyen d'armement active le moyen de déploiement et lorsque d'autre part un événement contenu dans une liste préétablie se produit, cette liste comportant tous les événements suivants :
- un individu manoeuvre de manière répétée le moyen manuel pour envoyer l'ordre de déploiement en le sollicitant un nombre de fois supérieur ou à égal à un seuil prédéterminé, ce seuil étant supérieur à l'unité,
- le moyen de déploiement reste activé à l'issue d'un temps prédéterminé, le temps prédéterminé s'écoulant lorsqu'un individu manoeuvre le moyen manuel pour envoyer l'ordre de déploiement en le sollicitant un nombre de fois inférieur au seuil,
- les deux capteurs d'immersion signalent une immersion au moyen de déploiement en lui envoyant l'ordre de déploiement,
- le moyen de déploiement reste activé à l'issue d'un temps prédéterminé, le temps prédéterminé s'écoulant lorsqu'un unique capteur d'immersion signale une immersion en envoyant ledit ordre de déploiement.

Ainsi, il devient possible de réaliser un déploiement manuel de chaque flotteur à l'aide du moyen manuel, un bouton de commande agencé sur un manche de pilotage par exemple. Le déploiement est réalisé immédiatement si l'ordre de déploiement est répété, à savoir si un individu manoeuvre le moyen manuel un nombre de fois supérieur ou égal à un seuil.

Dans la négative, le déploiement de chaque flotteur ne devient effectif qu'à l'issue d'un temps prédéterminé, afin de laisser la possibilité au pilote d'annuler l'ordre de déploiement par exemple.

Par exemple, le seuil est éventuellement égal à 3. Cette valeur du seuil permet de garantir que le pilote a volontairement manoeuvré le moyen manuel, sans nécessiter un nombre trop important de sollicitations de ce moyen manuel.

De même, le temps prédéterminé est éventuellement égal à dix secondes. Dès lors le temps prédéterminé permet à un individu de réagir, sans que ce temps de réaction soit trop préjudiciable en cas d'incident avéré.

Avantageusement, on manoeuvre le moyen d'armement pour activer le moyen de déploiement lorsque l'aéronef survole une étendue d'eau. Ainsi, on garantit par exemple qu'un flotteur ne va pas être déployé lorsque l'aéronef est au sol.

Par ailleurs, lorsque le moyen de déploiement reçoit un ordre de déploiement provenant d'un capteur d'immersion ou d'un moyen manuel, si le moyen d'armement n'active pas le moyen de déploiement, on signale l'ordre à un individu et on ne déploie pas ledit au moins un flotteur.

L'individu constate alors soit un défaut du système de flottaison, soit qu'il a manoeuvré indûment le moyen manuel.

Selon un autre aspect, le moyen d'armement activant le moyen de déploiement, lorsque le moyen de déploiement reçoit un ordre de déploiement provenant d'un unique capteur d'immersion ou d'un moyen manuel manoeuvré un nombre de fois inférieur à un seuil le cas échéant, on signale ledit ordre à un individu.

Ainsi, cet individu est prévenu qu'un ordre de déploiement a été donné avant que le déploiement ne devienne effectif, à savoir avant la fin du temps prédéterminé. Si l'ordre est indu, ledit individu peut désarmer le moyen de déploiement et ainsi éviter un déploiement intempestif.

Selon une première variante, le déploiement automatique de chaque flotteur est réalisé lorsque le temps prédéterminé est écoulé.

Selon une deuxième variante, lorsque le moyen de déploiement reçoit un ordre de déploiement de chaque flotteur provenant d'un unique capteur d'immersion ou d'un moyen manuel manoeuvré un nombre de fois inférieur à un seuil le cas échéant, à l'issue du temps prédéterminé le moyen de déploiement :
- déploie chaque flotteur si l'aéronef se trouve dans un domaine de vol prédéterminé défini par la hauteur et la vitesse d'avancement de l'aéronef,
- ne déploie pas ledit au moins un flotteur si l'aéronef ne se trouve pas dans ce domaine de vol prédéterminé.

Par conséquent, le déploiement de chaque flotteur est limité au domaine de vol prédéterminé uniquement lorsque l'ordre de déploiement n'est pas confirmé par une utilisation répétée du moyen manuel ou par une activation de deux capteurs d'immersion. En dehors de ce domaine de vol prédéterminé, chaque flotteur ne peut être déployé que par une utilisation répétée du moyen manuel ou par une activation de deux capteurs d'immersion.

On entend par « hauteur » la distance la plus courte séparant l'aéronef de la surface survolée par l'aéronef.

Ledit domaine de vol prédéterminé comprend au moins :
- une première zone définie par une vitesse d'avancement de l'aéronef comprise entre une vitesse maximale et une vitesse intermédiaire qui est inférieure à la vitesse maximale, et par une hauteur inférieure à une hauteur maximale,
- une deuxième zone définie par une vitesse d'avancement de l'aéronef inférieure à ladite vitesse intermédiaire, et par une hauteur inférieure à une hauteur intermédiaire qui est inférieure à la hauteur maximale

De plus, ledit domaine de vol prédéterminé peut aussi comprendre une troisième zone définie par une vitesse d'avancement inférieure à la vitesse intermédiaire, et par une hauteur inférieure à une hauteur seuil. La hauteur seuil est représentée par un segment dans un diagramme présentant la vitesse d'avancement en abscisses et la hauteur en ordonnées, le segment partant d'un premier point pour atteindre un second point, le premier point ayant dans ledit diagramme pour abscisse une vitesse d'avancement nulle et pour ordonnée la hauteur intermédiaire, le deuxième point ayant dans ledit diagramme pour abscisse la vitesse intermédiaire et pour ordonnée la hauteur maximale.

Selon un autre aspect, on mémorise tout ordre de déploiement, à des fins de maintenance notamment, l'ordre de déploiement étant donné par un moyen manuel le cas échéant ou un capteur d'immersion.

Outre un procédé, l'invention a pour objet un système de flottabilité mettant en oeuvre ce procédé.

Un tel système de flottabilité pour aéronef comporte au moins un flotteur et un moyen de déploiement de chaque flotteur, ce système de flottabilité ayant un moyen d'armement pour activer le moyen déploiement de chaque flotteur, ce système de flottabilité ayant au moins deux capteurs d'immersion pour donner un ordre de déploiement automatique de chaque flotteur au moyen de déploiement.

Ce système de flottabilité est notamment remarquable en ce que le moyen d'armement étant activé uniquement manuellement et non pas selon des paramètres de surveillance de type vitesse et hauteur, le moyen de déploiement étant muni d'une mémoire contenant une liste préétablie d'événements, le moyen de déploiement déploie chaque flotteur lorsque l'un desdits événement se produit, le moyen de déploiement comportant un moyen de temporisation pour temporiser le déploiement de chaque flotteur lorsque ce moyen de déploiement reçoit un ordre de déploiement de chaque flotteur provenant d'un unique capteur d'immersion, ladite liste comportant au moins les événements suivants :
- lesdits deux capteurs d'immersion signalent une immersion au moyen de déploiement en lui envoyant ledit ordre de déploiement,
- le moyen de déploiement reste activé à l'issue d'un temps prédéterminé, ledit temps prédéterminé s'écoulant lorsqu'un unique capteur d'immersion signale une immersion en envoyant ledit ordre de déploiement.

Ce système de flottabilité met en oeuvre le procédé selon l'invention en étant muni d'un moyen d'armement manoeuvrable manuellement uniquement et d'une mémoire stockant une liste réduite du type décrit précédemment d'événements susceptibles de générer le déclenchement de chaque flotteur.

Ce système de flottabilité peut comprendre une ou plusieurs des caractéristiques qui suivent.

Selon une variante, le système de flottabilité ayant un moyen manuel pour donner un ordre de déploiement du flotteur au moyen de déploiement sur requête manuelle d'un individu, le moyen de temporisation temporisant le déploiement de chaque flotteur lorsque ce moyen de déploiement reçoit un ordre de déploiement de chaque flotteur provenant d'un unique capteur d'immersion ou d'un moyen manuel manoeuvré un nombre de fois inférieur à un seuil prédéterminé, ladite liste comprend les événements suivants :
- lesdits deux capteurs d'immersion signalent une immersion au moyen de déploiement en lui envoyant ledit ordre de déploiement,
- le moyen de déploiement reste activé à l'issue d'un temps prédéterminé, ledit temps prédéterminé s'écoulant lorsqu'un unique capteur d'immersion signale une immersion en envoyant ledit ordre de déploiement,
- un individu manoeuvre de manière répété ledit moyen manuel pour envoyer ledit ordre de déploiement en le sollicitant un nombre de fois supérieur ou à égal à un seuil prédéterminé, ledit seuil étant supérieur à l'unité,
- le moyen de déploiement reste activé à l'issue d'un temps prédéterminé, ledit temps prédéterminé s'écoulant lorsqu'un individu manoeuvre ledit moyen manuel pour envoyer ledit ordre de déploiement en le sollicitant un nombre de fois inférieur audit seuil.

Ce système de flottabilité peut en outre comporter un moyen de signalement visuel ou sonore à un individu de la présence d'un ordre de déploiement de chaque flotteur parvenu au moyen de déploiement, le moyen de signalement coopérant avec le moyen de déploiement. Le moyen de déploiement peut ordonner alors au moyen de signalement d'émettre un signal sonore ou visuel lorsqu'il reçoit un ordre de déploiement de chaque flotteur.

De plus, ce système de flottabilité peut comporter un premier moyen de mesure de la hauteur de l'aéronef et un deuxième moyen de mesure de la vitesse d'avancement de l'aéronef coopérant avec le moyen de déploiement, le moyen de déploiement interdisant un déploiement dudit au moins un flotteur :
- lorsque ce moyen de déploiement reçoit un ordre de déploiement de chaque flotteur provenant d'un unique capteur d'immersion ou le cas échéant d'un moyen manuel manoeuvré un nombre de fois inférieur à un seuil prédéterminé, et
- lorsque l'aéronef se trouve en dehors d'un domaine de vol prédéterminé défini par la hauteur et la vitesse d'avancement de l'aéronef.

Si l'ordre de déploiement a été envoyé par un moyen manuel sollicité un nombre de fois supérieur ou égal à un seuil prédéterminé ou par deux capteurs d'immersion, le déploiement de chaque flotteur est au contraire requis sans délai.

Enfin, l'invention vise un aéronef comportant un système de flottabilité du type précédemment décrit.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef selon l'invention,
- la figure 2, un diagramme présentant un domaine de vol selon l'invention, et
- la figure 3, un schéma explicitant le procédé selon une variante préférée de l'invention.

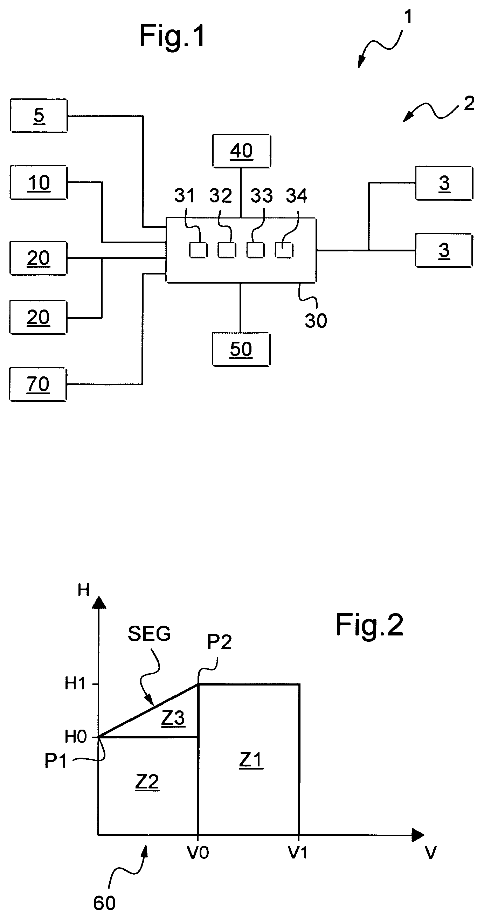

La figure 1 présente un aéronef 1 muni d'un système de flottabilité 2.

Ce système de flottabilité 2 comprend au moins un flotteur 3 assurant la flottaison de l'aéronef 1 lors d'un atterrissage sur l'eau, des flotteurs 3 selon l'état de la technique par exemple. La figure 1 présente deux flotteurs, toutefois, le système de flottabilité 2 pourrait être muni d'un flotteur ou encore d'un nombre de flotteur supérieur à 2.

Dès lors le système de flottabilité 2 est muni d'un moyen de déploiement 30 pour déployer le cas échéant les flotteurs 3, ce moyen de déploiement 30 ayant au moins un organe de déploiement 35 pour déployer les flotteurs. Selon une variante, les flotteurs 3 sont des flotteurs gonflables par l'organe de déploiement 35 du moyen de déploiement 30 le cas échéant.

On peut se référer à l'état de la technique pour trouver des exemples de réalisation des flotteurs et d'organes de déploiement de ces flotteurs.

De plus, le système de flottabilité 30 comprend un moyen d'armement 5 pour activer le moyen de déploiement. Ce moyen d'armement 5 est par exemple commandé uniquement par un individu, et non pas en fonction de paramètres de surveillance de l'aéronef. Lorsque le moyen d'armement 5 est armé par un tel individu, un occupant de l'aéronef tel qu'un pilote, le moyen de déploiement 30 est susceptible de déployer chaque flotteur 3, alors qu'à l'inverse le déploiement des flotteurs est interdit lorsque le moyen d'armement 5 n'est pas armé.

Favorablement, le moyen d'armement est armé uniquement lors du survol d'une étendue d'eau.

Outre un moyen d'armement 5 apte à activer le moyen de déploiement 30, en l'alimentant électriquement par exemple, le système de flottabilité est pourvu de moyens de déclenchement pour donner un ordre de déploiement à ce moyen de déploiement 30. Par suite, le moyen d'armement 5 a pour fonction d'activer le moyen de déploiement, les moyens de déclenchement ayant pour fonction d'ordonner le déploiement en tant que tel des flotteurs.

Ces moyens de déclenchement comprennent des moyens automatiques reliés au moyen de déploiement 30 pour donner un ordre de déploiement au moyen de déploiement 30. Ces moyens automatiques incluent au moins deux capteurs d'immersion 20 détectant une immersion de l'aéronef.

Ces moyens de déclenchement peuvent de plus comprendre un moyen manuel 10 relié au moyen de déploiement, un individu manoeuvrant manuellement le moyen manuel pour donner un ordre de déploiement au moyen de déploiement 30.

Le déploiement des flotteurs 3 devient effectif lorsque d'une part le moyen d'armement 5 a activé le moyen de déploiement 30, et d'autre part un ordre de déploiement relatif à un événement contenu dans une liste préétablie se produit.

Par conséquent, le moyen de déploiement contient notamment une mémoire 31 stockant les informations liées auxdits événements, et un moyen de commande 33 de type processeur par exemple. Ce moyen de commande 33 vérifie en temps réel si les événements programmés dans la mémoire se produisent et ordonne à l'organe de déploiement 34 de déployer les flotteurs le cas échéant.

Selon le procédé appliqué, ladite liste comporte au moins :
- un événement relatif à un ordre de déploiement confirmé, tel qu'un ordre de déploiement provenant de deux capteurs d'immersion ou le cas échéant provenant d'un moyen manuel manoeuvré un nombre de fois supérieur ou égal à un seuil, et
- un événement relatif à un ordre de déploiement non confirmé, tel qu'un ordre de déploiement provenant d'un unique capteur d'immersion ou le cas échéant provenant d'un moyen manuel manoeuvré un nombre de fois inférieur audit seuil.

Selon événement relatif à un ordre de déploiement confirmé, on déploie immédiatement le flotteur, alors que selon événement relatif à un ordre de déploiement non confirmé on temporise le déploiement du flotteur.

Ainsi, la liste comporte au moins :
- un premier événement selon lequel, deux capteurs d'immersion 20 signalent une immersion au moyen de déploiement en lui envoyant chacun un ordre de déploiement, et
- un deuxième événement selon lequel le moyen de déploiement 30 reste activé à l'issue d'un temps prédéterminé, ce temps prédéterminé s'écoulant lorsqu'un unique capteur d'immersion 20 signale une immersion en envoyant un ordre de déploiement.

De plus, selon la variante, la liste comporte aussi :
- un troisième événement selon lequel un individu manoeuvre de manière répété le moyen manuel 10 pour envoyer des ordres de déploiement en le sollicitant un nombre de fois supérieur ou à égal à un seuil prédéterminé, ce seuil étant supérieur à l'unité et éventuellement égal à 3,
- un quatrième événement selon lequel le moyen de déploiement 30 reste activé à l'issue d'un temps prédéterminé, de l'ordre de dix secondes, ce temps prédéterminé s'écoulant lorsqu'un individu manoeuvre le moyen manuel 10 pour envoyer des ordres de déploiement en le sollicitant un nombre de fois inférieur au seuil.

Selon ce premier événement et ce troisième événement, le moyen de déploiement requiert immédiatement le déploiement des flotteurs en cas d'ordre de déploiement confirmé.

De plus, le moyen de déploiement 30 comprend un moyen de temporisation 32 pour retarder le déploiement des flotteurs. Ce moyen de temporisation peut être un programme auquel fait appel le moyen de commande 33.

Dès lors, selon le deuxième événement et le quatrième événement, le moyen de temporisation 30 autorise le déploiement des flotteurs 3 à l'issue du temps prédéterminé en cas d'ordre de déploiement non confirmé.

Selon une option, le système de flottabilité comporte un moyen de signalement 70 relié au moyen de déploiement 30. Lorsque ce moyen de déploiement 30 reçoit un ordre de déploiement, le moyen de déploiement 30 commande le moyen de signalement 70 pour signaler à un occupant de l'aéronef la présence d'un ordre de déploiement. Le moyen de signalement 70 peut être un moyen visuel ou sonore, une alarme visuelle de type couleur ambre par exemple.

Si l'ordre de déploiement a été lancé dans le cadre du deuxième événement et du quatrième événement et, si cet occupant ne veut pas requérir le déploiement des flotteurs alors cet individu peut désarmer le moyen de dépliement 30 à l'aide du moyen d'armement 5.

Ainsi, lorsque le moyen de déploiement 30 reçoit un ordre de déploiement provenant d'un capteur d'immersion 20 ou du moyen manuel 10 le cas échéant, on signale ledit ordre à un individu mais on ne déploie pas les flotteurs 3 si le moyen d'armement 5 n'active pas le moyen de déploiement 30.

Lorsque le moyen de déploiement 30 reçoit un ordre de déploiement provenant d'un unique capteur d'immersion 20 ou d'un moyen manuel 10 manoeuvré un nombre de fois inférieur audit seuil conformément au deuxième événement et au quatrième événement précités, on signale l'ordre de déploiement à au moins un occupant de l'aéronef et on déclenche la temporisation si le moyen d'armement 5 active le moyen de déploiement 30.

Selon une variante, à l'issue du temps prédéterminé, le moyen de déploiement 30 ordonne le déploiement des flotteurs 3.

Selon une autre variante, le système de flottabilité 2 est muni d'un premier moyen de mesure 40 de la hauteur H de l'aéronef 1, à l'aide d'une radiosonde par exemple, et un deuxième moyen de mesure 50 de la vitesse d'avancement V de l'aéronef 1.

Si le moyen de déploiement 30 reçoit un ordre de déploiement des flotteurs 3 provenant d'un unique capteur d'immersion 20 ou d'un moyen manuel 10 qui est manoeuvré un nombre de fois inférieur au seuil. à l'issue du temps prédéterminé le moyen de déploiement 30 déploie les flotteurs 3 si l'aéronef 1 se trouve dans un domaine de vol prédéterminé défini par la hauteur H et la vitesse d'avancement V de l'aéronef 1.

En référence à la figure 2, le domaine de vol 60 prédéterminé comprend au moins:
- une première zone Z1 définie par une vitesse d'avancement V comprise entre une vitesse maximale V1 et une vitesse intermédiaire V0 qui est inférieure à la vitesse maximale V1, et par une hauteur H inférieure à une hauteur maximale H1,
- une deuxième zone Z2 définie par une vitesse d'avancement V inférieure à la vitesse intermédiaire V0, et par une hauteur H inférieure à une hauteur intermédiaire H0 qui est inférieure à la hauteur maximale H1.

De plus, selon une variante, le domaine de vol 60 prédéterminé comprend aussi une troisième zone Z3 définie par une vitesse d'avancement V inférieure à la vitesse intermédiaire V0, et par une hauteur H inférieure à une hauteur seuil

Cette hauteur seuil est variable linéairement en fonction de la vitesse d'avancement. Dès lors, elle est représentée par un segment SEG dans un diagramme présentant la vitesse d'avancement V en abscisses et la hauteur H en ordonnées, le segment SEG partant d'un premier point P1 pour atteindre un second point P2, le premier point P1 ayant dans le diagramme pour abscisse une vitesse d'avancement nulle et pour ordonnée la hauteur intermédiaire H1, le deuxième point P2 ayant dans ce diagramme pour abscisse la vitesse intermédiaire V0 et pour ordonnée la hauteur maximale H2.

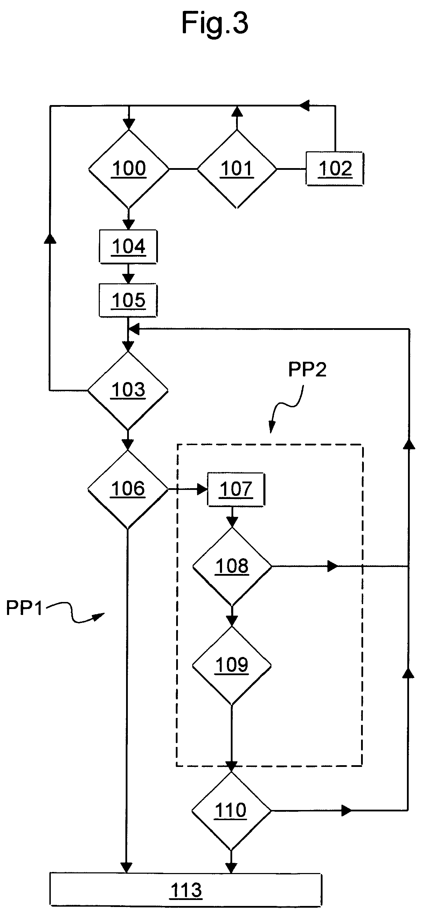

La figure 3 explique les différentes étapes d'une variante préférée du procédé selon l'invention.

Dans une première étape 100, le moyen de déploiement surveille en temps réel l'arrivée d'un ordre de déploiement, indépendamment de la nature de cet ordre de déploiement.

En l'absence d'un tel ordre de déploiement, durant une étape 101 de contrôle, le moyen de déploiement vérifie si le moyen de signalement 70 est activé. Si le moyen de signalement signale la présence d'un ordre de déploiement, durant une étape de rectification 102, le moyen de déploiement ordonne au moyen de signalement de cesser de signaler la présence d'un tel ordre de déploiement.

Si un ordre de déploiement à été reçu, durant une étape de mémorisation 104, on mémorise cet ordre de déploiement à des fins de maintenance, dans une mémoire prévue à cet effet ou encore dans la mémoire 31 du moyen de déploiement 30 par exemple.

De plus, durant une étape de signalisation 105, le moyen de déploiement 30 ordonne au moyen de signalement de signaler cet ordre de déploiement aux occupants de l'aéronef.

Durant une étape de test 103, on vérifie si le moyen d'armement 5 a été activé. Dans la négative, les flotteurs 3 ne sont pas déployés.

A l'inverse, si le moyen d'armement 5 active le moyen de déploiement 30, durant une étape 106, on détermine la nature de l'événement ayant engendré l'ordre de déploiement.

Lorsque le moyen de déploiement 30 a été sollicité par un individu manoeuvrant le cas échéant le moyen manuel 10 en le sollicitant un nombre de fois supérieur ou à égal à un seuil prédéterminé ou par deux capteurs d'immersion 20, le moyen de déploiement requiert un déploiement immédiat des flotteurs durant une étape de déploiement 113 selon une première procédure PP1.

Par contre, lorsque le moyen de déploiement 30 a été sollicité par un individu manoeuvrant le moyen manuel 10 en le sollicitant un nombre de fois inférieur à un seuil prédéterminé ou par un unique capteur d'immersion 20, on met en oeuvre une deuxième procédure PP2 visant à temporiser le déploiement.

Durant une étape de temporisation 107, le moyen de temporisation 32 mesure le temps qui s'écoule à compter de la réception de l'ordre de déploiement.

Durant une étape 108 d'étude de la situation de l'aéronef, on détermine si l'aéronef se trouve dans le domaine de vol prédéterminé.

Dans la négative, seule une sollicitation du moyen manuel 10 un nombre de fois supérieur ou à égal à un seuil prédéterminé ou par immersion de deux capteurs d'immersion 20 peuvent engendrer le déploiement des flotteurs selon la première procédure PP1.

Si l'aéronef se trouve dans le domaine de vol prédéterminé, il est possible de déclencher une alarme sonore pour prévenir les occupants de l'aéronef de l'imminence du déploiement des flotteurs durant une étape 109.

Par ailleurs, si les occupants ne désirent pas déclencher le déploiement des flotteurs 3, durant une étape 110 pouvant se produire à tout moment durant la deuxième procédure PP2, ces occupants peuvent agir sur le moyen d'armement 5 pour interrompre la procédure de déploiement.

A l'issue d'un temps prédéterminé, le moyen de déploiement requiert le déploiement des flotteurs durant l'étape de déploiement 113.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par le texte des revendications.

## Revendications

1. Procédé de commande d'un système de flottabilité (2) pour aéronef (1), ledit système de flottabilité (2) comportant au moins un flotteur (3) et un moyen de déploiement (30) dudit flotteur (3), ledit système de flottabilité (2) ayant un moyen d'armement (5) pour activer le moyen déploiement (30) dudit flotteur (3), ledit système de flottabilité (2) ayant au moins deux capteurs d'immersion (20) pour donner un ordre de déploiement automatique dudit flotteur (3) au moyen de déploiement (30),
au cours duquel ledit moyen de déploiement (30) déploie chaque flotteur (3) lorsque d'une part le moyen d'armement (5) active le moyen de déploiement (30) et lorsque d'autre part un événement contenu dans une liste préétablie se produit, ladite liste comportant au moins les événements suivants :
- lesdits deux capteurs d'immersion (20) signalent une immersion au moyen de déploiement en lui envoyant ledit ordre de déploiement,
- le moyen de déploiement (30) reste activé à l'issue d'un temps prédéterminé, ledit temps prédéterminé s'écoulant lorsqu'un unique capteur d'immersion (20) signale une immersion en envoyant ledit ordre de déploiement.

2. Procédé selon la revendication 1,
**caractérisé en ce que** ledit système de flottabilité (2) ayant un moyen manuel (10) pour donner un ordre de déploiement dudit flotteur (3) au moyen de déploiement (30) sur requête manuelle d'un individu, ladite liste comprend les événements suivants :
- lesdits deux capteurs d'immersion (20) signalent une immersion au moyen de déploiement en lui envoyant ledit ordre de déploiement,
- le moyen de déploiement (30) reste activé à l'issue d'un temps prédéterminé, ledit temps prédéterminé s'écoulant lorsqu'un unique capteur d'immersion (20) signale une immersion en envoyant ledit ordre de déploiement,
- un individu manoeuvre de manière répété ledit moyen manuel (10) pour envoyer ledit ordre de déploiement en le sollicitant un nombre de fois supérieur ou à égal à un seuil prédéterminé, ledit seuil étant supérieur à l'unité,
- le moyen de déploiement (30) reste activé à l'issue d'un temps prédéterminé, ledit temps prédéterminé s'écoulant lorsqu'un individu manoeuvre ledit moyen manuel (10) pour envoyer ledit ordre de déploiement en le sollicitant un nombre de fois inférieur audit seuil.

3. Procédé selon la revendication 2,
**caractérisé en ce que** ledit seuil est égal à 3.

4. Procédé selon l'une quelconque des revendications 1 à 3,
**caractérisé en ce que** ledit temps prédéterminé est égal à dix secondes.

5. Procédé selon l'une quelconque des revendications 1 à 4,
**caractérisé en ce que** l'on manoeuvre le moyen d'armement (5) pour activer le moyen de déploiement (30) lorsque l'aéronef (1) survole une étendue d'eau.

6. Procédé selon l'une quelconque des revendications 1 à 4, **caractérisé en ce que**, lorsque le moyen de déploiement (30) reçoit un ordre de déploiement provenant d'un capteur d'immersion (20) ou d'un moyen manuel (10), si le moyen d'armement (5) n'active pas le moyen de déploiement (30), on signale ledit ordre à un individu et on ne déploie pas ledit au moins un flotteur (3).

7. Procédé selon l'une quelconque des revendications 1 à 6,
**caractérisé en ce que**, lorsque le moyen de déploiement (30) reçoit un ordre de déploiement provenant d'un unique capteur d'immersion (20) ou d'un moyen manuel (10) manoeuvré un nombre de fois inférieur à un seuil, le moyen d'armement (5) activant le moyen de déploiement (30), on signale ledit ordre à un individu.

8. Procédé selon l'une quelconque des revendications 1 à 6,
**caractérisé en ce que**, lorsque le moyen de déploiement (30) reçoit un ordre de déploiement de chaque flotteur (3) provenant d'un unique capteur d'immersion (20) ou d'un moyen manuel (10) manoeuvré un nombre de fois inférieur à un seuil, à l'issue du temps prédéterminé, le moyen de déploiement :
- déploie chaque flotteur (3) si l'aéronef (1) se trouve dans un domaine de vol (60) prédéterminé défini par la hauteur (H) et la vitesse d'avancement (V) de l'aéronef (1),
- ne déploie pas ledit au moins un flotteur (3) si l'aéronef (1) ne se trouve pas dans ledit domaine de vol (60) prédéterminé.

9. Procédé selon la revendication 8,
**caractérisé en ce que** ledit domaine de vol (60) prédéterminé comprend au moins:
- une première zone (Z1) définie par une vitesse d'avancement (V) comprise entre une vitesse maximale (V1) et une vitesse intermédiaire (V0) qui est inférieure à la vitesse maximale (V1), et par une hauteur (H) inférieure à une hauteur maximale (H1),
- une deuxième zone (Z2) définie par une vitesse d'avancement (V) inférieure à ladite vitesse intermédiaire (V0), et par une hauteur (H) inférieure à une hauteur intermédiaire (H0) qui est inférieure à la hauteur maximale (H1).

10. Procédé selon la revendication 9,
**caractérisé en ce que** ledit domaine de vol (60) prédéterminé comprend une troisième zone (Z3) définie par une vitesse d'avancement (V) inférieure à ladite vitesse intermédiaire (V0), et par une hauteur (H) inférieure à une hauteur seuil, ladite hauteur seuil étant représentée par un segment (SEG) dans un diagramme présentant la vitesse d'avancement (V) en abscisses et la hauteur (H) en ordonnées, le segment (SEG) partant d'un premier point (P1) pour atteindre un second point (P2), ledit premier point (P1) ayant dans ledit diagramme pour abscisse une vitesse d'avancement (V) nulle et pour ordonnée ladite hauteur intermédiaire (H1), ledit deuxième point (P2) ayant dans ledit diagramme pour abscisse ladite vitesse intermédiaire (V0) et pour ordonnée ladite hauteur maximale (H2).

11. Procédé selon l'une quelconque des revendications 1 à 10,
**caractérisé en ce que** l'on mémorise tout ordre de déploiement.

12. Système de flottabilité (2) pour aéronef (1), ledit système de flottabilité (2) comportant au moins un flotteur (3) et un moyen de déploiement (30) de chaque flotteur (3), ledit système de flottabilité (2) ayant un moyen d'armement (5) pour activer le moyen déploiement (30) de chaque flotteur (3), ledit système de flottabilité (2) ayant au moins deux capteurs d'immersion (20) pour donner un ordre de déploiement automatique de chaque flotteur (3) au moyen de déploiement (30),
**caractérisé en ce que** ledit moyen d'armement (5) étant activé uniquement manuellement, ledit moyen de déploiement (30) étant muni d'une mémoire (31) contenant une liste préétablie d'événements, ledit moyen de déploiement (30) déploie chaque flotteur (3) lorsqu'un desdits événement se produit, ledit moyen de déploiement (30) comportant un moyen de temporisation (32) pour temporiser le déploiement de chaque flotteur (3) lorsque ce moyen de déploiement (30) reçoit un ordre de déploiement de chaque flotteur (3) provenant d'un unique capteur d'immersion (20), ladite liste comportant au moins lesdits événements suivants :
- lesdits deux capteurs d'immersion (20) signalent une immersion au moyen de déploiement en lui envoyant ledit ordre de déploiement,
- le moyen de déploiement (30) reste activé à l'issue d'un temps prédéterminé, ledit temps prédéterminé s'écoulant lorsqu'un unique capteur d'immersion (20) signale une immersion en envoyant ledit ordre de déploiement.

13. Système de flottabilité selon la revendication 12,
**caractérisé en ce que** ledit système de flottabilité (2) ayant un moyen manuel (10) pour donner un ordre de déploiement dudit flotteur (3) au moyen de déploiement (30) sur requête manuelle d'un individu, le moyen de temporisation (32) temporisant le déploiement de chaque flotteur (3) lorsque ce moyen de déploiement (30) reçoit un ordre de déploiement de chaque flotteur (3) provenant d'un unique capteur d'immersion (20) ou d'un moyen manuel (10) manoeuvré un nombre de fois inférieur à un seuil prédéterminé, ladite liste comprend les événements suivants :
- lesdits deux capteurs d'immersion (20) signalent une immersion au moyen de déploiement en lui envoyant ledit ordre de déploiement,
- le moyen de déploiement (30) reste activé à l'issue d'un temps prédéterminé, ledit temps prédéterminé s'écoulant lorsqu'un unique capteur d'immersion (20) signale une immersion en envoyant ledit ordre de déploiement,
- un individu manoeuvre de manière répété ledit moyen manuel (10) pour envoyer ledit ordre de déploiement en le sollicitant un nombre de fois supérieur ou à égal à un seuil prédéterminé, ledit seuil étant supérieur à l'unité,
- le moyen de déploiement (30) reste activé à l'issue d'un temps prédéterminé, ledit temps prédéterminé s'écoulant lorsqu'un individu manoeuvre ledit moyen manuel (10) pour envoyer ledit ordre de déploiement en le sollicitant un nombre de fois inférieur audit seuil.

14. Système de flottabilité selon la revendication 12,
**caractérisé en ce qu'**il comporte un moyen de signalement (70) à un individu de la présence d'un ordre de déploiement de chaque flotteur (3) parvenu audit moyen de déploiement (30), ledit moyen de signalement (70) coopérant avec ledit moyen de déploiement (30).

15. Système de flottabilité selon la revendication 12, **caractérisé en ce qu'**il comporte un premier moyen de mesure (40) de la hauteur (H) dudit aéronef (1) et un deuxième moyen de mesure (50) de la vitesse d'avancement (V) dudit aéronef (1) coopérant avec ledit moyen de déploiement (30), ledit moyen de déploiement (30) interdisant un déploiement de chaque flotteur (3):
- lorsque ce moyen de déploiement (30) reçoit un ordre de déploiement de chaque flotteur (3) provenant d'un unique capteur d'immersion (20) ou d'un moyen manuel (10) manoeuvré un nombre de fois inférieur à un seuil prédéterminé, et
- lorsque l'aéronef (1) se trouve en dehors d'un domaine de vol (60) prédéterminé défini par la hauteur (H) et la vitesse d'avancement (V) de l'aéronef (1).

16. Aéronef,
**caractérisé en ce qu'**il comporte un système de flottabilité (2) selon l'une quelconque des revendications 12 à 15.

## Patentansprüche

1. Verfahren zur Steuerung eines Auftriebssystems (2) für ein Luftfahrzeug (1), wobei das Auftriebssystem (2) mindestens einen Schwimmer (3) und ein Entfaltungsmittel (30) für den Schwimmer (3) aufweist, wobei das Auftriebssystem (2) eine Ladeeinrichtung (5) zum Aktivieren des Entfaltungsmittels (30) des Schwimmers (3) aufweist, und wobei das Auftriebssystem (2) mindestens zwei Eintauchsensoren (20) aufweist zum Geben eines Befehls zum automatischen Entfalten des Schwimmers (3) an das Entfaltungsmittel (30), bei dem das Entfaltungsmittel (30) jeden Schwimmer (3) entfaltet, wenn einerseits die Ladeeinrichtung (5) das Entfaltungsmittel (30) aktiviert, und wenn andererseits ein Ereignis auftritt, das in einer zuvor erstellten Liste enthalten ist, wobei die Liste mindestens die folgenden Ereignisse enthalt:
- die beiden Eintauchsensoren (20) dem Entfaltungsmittel ein Eintauchen anzeigen, indem sie ihm den Entfaltungsbefehl senden,
- das Entfaltungsmittel (30) nach Ablauf einer vorbestimmten Zeitspanne aktiviert bleibt, wobei die vorbestimmte Zeitspanne vergeht, wenn ein einziger Eintauchsensor (20) ein Eintauchen anzeigt, indem er den Entfaltungsbefehl sendet.

2. Verfahren nach Anspruch 1,
**dadurch gekennzeichnet, dass** das Auftriebssystem (2) ein manuelles Mittel (10) aufweist, um auf eine manuelle Eingabe einer Person hin einen Befehl zur Entfaltung des Schwimmers (3) an das Entfaltungsmittel (30) zu geben, wobei die Liste folgende Ereignisse aufweist:
- die beiden Eintauchsensoren (20) zeigen dem Entfaltungsmittel ein Eintauchen an, indem sie ihm den Entfaltungsbefehl senden,
- das Entfaltungsmittel (30) nach Verstreichen einer vorbestimmten Zeitspanne aktiviert bleibt, wobei die vorbestimmte Zeitspanne vergeht, wenn ein einziger Eintauchsensor (20) ein Eintauchen anzeigt, indem er den Entfaltungsbefehl sendet,
- eine Person wiederholt das manuelle Mittel (10) betätigt, um den Entfaltungsbefehl zu senden, indem sie das manuelle Mittel eine Anzahl von Malen betätigt, die größer oder gleich einem vorbestimmen Schwellenwert ist, wobei der Schwellenwert größer als 1 ist,
- das Entfaltungsmittel (30) nach dem Ablauf einer vorbestimmten Zeitspanne aktiviert bleibt, wobei die vorbestimmte Zeitspanne vergeht, während eine Person das manuelle Mittel (10) betätigt, um den Entfaltungsbefehl zu senden, indem sie das manuelle Mittel eine Anzahl von Malen betätigt, die kleiner als der Schwellenwert ist.

3. Verfahren nach Anspruch 2,
**dadurch gekennzeichnet, dass** der Schwellenwert gleich 3 ist.

4. Verfahren nach einem der Ansprüche 1 bis 3,
**dadurch gekennzeichnet, dass** die vorbestimmte Zeitspanne gleich 10 Sekunden ist.

5. Verfahren nach einem der Ansprüche 1 bis 4,
**dadurch gekennzeichnet, dass** die Ladeeinrichtung (5) betätigt wird, um das Entfaltungsmittel (30) zu aktivieren, wenn das Luftfahrzeugs (1) eine Wasserfläche überfliegt.

6. Verfahren nach einem der Ansprüche 1 bis 4,
**dadurch gekennzeichnet, dass**, wenn das Entfaltungsmittel (30) einen Entfaltungsbefehl empfängt, der von einem Eintauchsensor (20) oder von einem manuellen Mittel (10) stammt, wenn die Ladeeinrichtung (5) nicht das Entfaltungsmittel (30) aktiviert, der Befehl einer Person angezeigt wird und der mindestens eine Schwimmer (3) nicht entfaltet wird.

7. Verfahren nach einem der Ansprüche 1 bis 6,
**dadurch gekennzeichnet, dass**, wenn das Entfaltungsmittel (30) einen Entfaltungsbefehl empfängt, der von einem einzigen Eintauchsensor (20) oder einem manuellen Mittel (10) stammt, das eine Anzahl von Malen betätigt wurde, die kleiner als ein Schwellenwert ist, die Ladeeinrichtung (5) das Entfaltungsmittel (30) aktiviert und der Befehl einer Person angezeigt wird.

8. Verfahren nach einem der Ansprüche 1 bis 6,
**dadurch gekennzeichnet, dass**, wenn das Entfaltungsmittel (30) einen Befehl zur Entfaltung eines jeden Schwimmers (3) von einem einzigen Eintauchsensor (20) oder einem manuellen Mittel (10) empfängt, das eine Anzahl von Malen betätigt wurde, die kleiner als ein Schwellenwert ist, am Ende einer vorbestimmten Zeitspanne das Entfaltungsmittel
- jeden Schwimmer (3) entfaltet, wenn das Luftfahrzeug (1) sich in einem vorbestimmten Flugbereich (60) befindet, der durch die Flughöhe (H) und die Vortriebsgeschwindigkeit (V) des Luftfahrzeugs (1) definiert ist,
- den mindestens einen Schwimmer (3) nicht entfaltet, wenn das Luftfahrzeug (1) sich nicht in dem vorbestimmten Flugbereich (30) befindet.

9. Verfahren nach Anspruch 8,
**dadurch gekennzeichnet, dass** der vorbestimmte Flugbereich (60) mindestens aufweist:
- eine erste Zone (Z1), die durch eine Vortriebsgeschwindigkeit (V) definiert ist, die zwischen einer maximalen Geschwindigkeit (V1) und einer mittleren Geschwindigkeit (V0) liegt, die kleiner als die maximale Geschwindigkeit (V1) ist, und durch eine Flughöhe (H), die kleiner als eine maximale Flughöhe (H1) ist,
- eine zweite Zone (Z2), die durch eine Vortriebsgeschwindigkeit (V), die kleiner als die mittlere Geschwindigkeit (V0) ist, und durch eine Höhe (H), die kleiner als eine mittlere Flughöhe (H0) ist, die kleiner als die maximale Flughöhe (H1) ist, definiert ist.

10. Verfahren nach Anspruch 9,
**dadurch gekennzeichnet, dass** der vorbestimmte Flugbereich (60) eine dritte Zone (Z3) aufweist, die durch eine Vortriebsgeschwindigkeit (V) definiert ist, die kleiner ist als die mittlere Geschwindigkeit (V0), und durch eine Flughöhe (H), die kleiner als eine Schwellen-Flughöhe ist, wobei die Schwellen-Flughöhe durch ein Segment (SEG) in einem Diagramm dargestellt ist, das die Vortriebsgeschwindigkeit (V) auf der Abszisse und die Flughöhe (H) auf der Ordinate darstellt, wobei das Segment (SEG) von einem ersten Punkt (P1) ausgeht, um einen zweiten Punkt (P2) zu erreichen, wobei der erste Punkt (P1) in dem Diagramm für die Abszisse eine VortriebsGeschwindigkeit (V) mit dem Wert Null aufweist, und für die Ordinate den mittleren Flughöhenwert (H1) aufweist, wobei der zweite Punkt (P2) in dem Diagramm für die Abszisse die mittlere Geschwindigkeit (V0) und für die Ordinate den maximalen Flughöhenwert (H2) aufweist.

11. Verfahren nach einem der Ansprüche 1 bis 10,
dadurch gekennzeichet, dass alle Entfaltungsbefehle gespeichert werden.

12. Auftriebssystem (2) für ein Luftfahrzeug (1), wobei das Auftriebssystem (2) mindestens einen Schwimmer (3) und ein Entfaltungsmittel (30) für jeden Schwimmer (3) aufweist, wobei das Auftriebssystem (2) eine Ladeeinrichtung (5) aufweist, um das Entfaltungsmittel (30) eines jeden Schwimmers (3) zu aktivieren, wobei das Auftriebssystem (2) mindestens zwei Eintauchsensoren (20) aufweist, um einen Befehl zur automatischen Entfaltung eines jeden Schwimmers (3) an das Entfaltungsmittel (30) zu geben,
**dadurch gekennzeichnet, dass** die Ladeeinrichtung (5) ausschließlich manuell aktiviert wird, wobei das Entfaltungsmittel (30) mit einem Speicher (31) versehen ist, der eine zuvor erstellte Liste von Ereignissen enthält, wobei das Entfaltungsmittel (30) jeden Schwimmer (3) entfaltet, wenn eines der Ereignisse eintritt, wobei das Entfaltungsmittel (30) ein Verzögerungsmittel (32) aufweist, um das Entfalten eines jeden Schwimmers (3) zu verzögern, wenn das Entfaltungsmittel (30) einen Befehl zum Entfalten eines jeden Schwimmers (3) erhält, der von einem einzigen Eintauchsensor (20) herrührt, wobei die Liste mindestens die folgenden Ereignisse umfasst:
- die beiden Eintauchsensoren (20) zeigen dem Entfaltungsmittel ein Eintauchen an, indem sie den Entfaltungsbefehl senden,
- das Entfaltungsmittel (30) bleibt am Ende einer vorbestimmten Zeitspanne aktiviert, wobei die vorbestimmte Zeitspanne verstreicht, wenn ein einziger Eintauchsensor (20) ein Eintauchen anzeigt, indem er den Entfaltungsbefehl sendet.

13. Auftriebssystem nach Anspruch 12,
**dadurch gekennzeichnet, dass** das Auftriebssystem (2) ein manuelles Mittel (10) aufweist, um auf eine manuelle Eingabe einer Person hin einen Befehl zur Entfaltung des Schwimmers (3) mittels des Entfaltungsmittels (30) zu geben, wobei das Verzögerungsmittel (32) das Entfalten eines jeden Schwimmers (3) verzögert, wenn das Entfaltungsmittel (30) einen Befehl zur Entfaltung eines jeden Schwimmers (3) empfängt, der ausgeht von einem einzigen Eintauchsensor (20) oder einem manuellen Mittel (10), das eine Anzahl von Malen betätigt wird, die kleiner als ein vorbestimmter Schwellenwert ist, wobei die Liste die folgenden Ereignisse umfasst:
- die beiden Eintauchsensoren (20) zeigen dem Entfaltungsmittel ein Eintauchen an, indem sie ihm den Entfaltungsbefehl senden,
- das Entfaltungsmittel (30) bleibt am Ende einer vorbestimmten Zeitspanne aktiviert, wobei die vorbestimmte Zeitspanne vergeht, wenn ein einziger Eintauchsensor (20) ein Eintauchen anzeigt, indem er den Entfaltungsbefehl sendet,
- eine Person wiederholt das manuelle Mittel (10) betätigt, um den Entfaltungsbefehl zu senden, indem sie das manuelle Mittel eine Anzahl von Malen betätigt, die größer oder gleich einem vorbestimmten Schwellenwert ist, wobei der Schwellenwert größer als 1 ist,
- das Entfaltungsmittel (30) am Ende einer vorbestimmten Zeitspanne aktiviert bleibt, wobei die vorbestimmte Zeitspanne vergeht, wenn eine Person das manuelle Mittel (10) betätigt, um durch dessen Bestätigung eine Anzahl von Malen, die kleiner als der Schwellenwert ist, den Entfaltungsbefehl zu senden.

14. Auftriebssystem nach Anspruch 12,
**dadurch gekennzeichnet, dass** es ein Mittel (70) zum Anzeigen einer Person des Vorliegens eines Befehls zum Entfalten eines jeden Schwimmers (3), der von dem Entfaltungsmittel (30) stammt, wobei das Anzeigemittel (70) mit dem Entfaltungsmittel (30) zusammenwirkt, aufweist.

15. Auftriebssystem nach Anspruch 12,
**dadurch gekennzeichnet, dass** es ein erstes Mittel (40) zur Messung der Flughöhe (H) des Luftfahrzeugs (1) und ein zweites Mittel (50) zur Messung der Vortriebsgeschwindigkeit (V) des Luftfahrzeugs (1) aufweist, die mit dem Entfaltungsmittel (30) zusammenwirken, wobei das Entfaltungsmittel (30) ein Entfalten eines jeden Schwimmers (3) verbietet,
- wenn dieses Entfaltungsmittel (30) einen Befehl zur Entfaltung eines jeden Schwimmers (3) empfängt, der von einem einzigen Eintauchsensor (20) oder einem manuellen Mittel (10) stammt, das eine Anzahl von Malen betätigt wurde, die kleiner als ein vorbestimmter Schwellenwert ist, und
- wenn das Luftfahrzeug (1) sich außerhalb eines vorbestimmten Flugbereich (60) befindet, der durch die Flughöhe (H) und die Vortriebsgeschwindigkeit (V) des Luftfahrzeugs (1) definiert ist.

16. Luftfahrzeug,
**dadurch gekennzeichnet, dass** es ein Auftriebssystem (2) nach einem der Ansprüche 12 bis 15 aufweist.

## Claims

1. Method for controlling a buoyancy system (2) for aircraft (1), said buoyancy system (2) comprising at least one float (3) and a deployment means (30) for deploying said float (3), said buoyancy system (2) having an arming means (5) for activating the deployment means (30) of said float (3), said buoyancy system (2) having at least two immersion sensors (20) for giving an order for automatic deployment of said float (3) to the deployment means (30),
during which said deployment means (30) deploys each float (3) when on the one hand the arming means (5) activates the deployment means (30) and when on the other hand an event contained in a pre-established list occurs, said list comprising at least the following events:
- said two immersion sensors (20) signal an immersion to the deployment means by sending said deployment order thereto,
- the deployment means (30) remains activated at the end of a predetermined time, said predetermined time elapsing when a single immersion sensor (20) signals an immersion by sending said deployment order.

2. Method according to claim 1,
**characterised in that** said buoyancy system (2) having a manual means (10) for giving an order for deployment of said float (3) to the deployment means (30) on manual request by a person, said list comprises the following events:
- said two immersion sensors (20) signal an immersion to the deployment means by sending said deployment order thereto,
- the deployment means (30) remains activated at the end of a predetermined time, said predetermined time elapsing when a single immersion sensor (20) signals an immersion by sending said deployment order,
- a person operates said manual means (10) repeatedly to send said deployment order by requesting it a number of times greater than or to equal to a predetermined threshold, said threshold being greater than one,
- the deployment means (30) remains activated at the end of a predetermined time, said predetermined time elapsing when a person operates said manual means (10) to send said deployment order by requesting it a number of times less than said threshold.

3. Method according to claim 2,
**characterised in that** said threshold is equal to 3.

4. Method according to any one of claims 1 to 3,
**characterised in that** said predetermined time is equal to ten seconds.

5. Method according to any one of claims 1 to 4,
**characterised in that** the arming means (5) is operated to activate the deployment means (30) when the aircraft (1) overflies an extent of water.

6. Method according to any one of claims 1 to 4,
**characterised in that**, when the deployment means (30) receives a deployment order coming from an immersion sensor (20) or from a manual means (10), if the arming means (5) does not activate the deployment means (30), said order is signalled to a person and said at least one float (3) is not deployed.

7. Method according to any one of claims 1 to 6,
**characterised in that**, when the deployment means (30) receives a deployment order coming from a single immersion sensor (20) or from a manual means (10) operated a number of times less than a threshold, the arming means (5) activating the deployment means (30), said order is signalled to a person.

8. Method according to any one of claims 1 to 6,
**characterised in that**, when the deployment means (30) receives an order for deployment of each float (3) coming from a single immersion sensor (20) or from a manual means (10) operated a number of times less than a threshold, at the end of the predetermined time, the deployment means:
- deploys each float (3) if the aircraft (1) is in a predetermined flight domain (60) defined by the height (H) and the forward speed (V) of the aircraft (1),
- does not deploy said at least one float (3) if the aircraft (1) is not in said predetermined flight domain (60).

9. Method according to claim 8,
**characterised in that** said predetermined flight domain (60) comprises at least:
- a first zone (Z1) defined by a forward speed (V) lying between a maximum speed (V1) and an intermediate speed (V0) which is less than the maximum speed (V1), and by a height (H) less than a maximum height (H1),
- a second zone (Z2) defined by a forward speed (V) less than said intermediate speed (V0), and by a height (H) less than an intermediate height (H0) which is less than the maximum height (H1).

10. Method according to claim 9,
**characterised in that** said predetermined flight domain (60) comprises a third zone (Z3) defined by a forward speed (V) less than said intermediate speed (V0), and by a height (H) less than a threshold height, said threshold height being represented by a segment (SEG) in a graph presenting the forward speed (V) as abscissae and the height (H) as ordinates, the segment (SEG) starting from a first point (P1) to reach a second point (P2), said first point (P1) having in said graph for abscissa a zero forward speed (V) and for ordinate said intermediate height (H1), said second point (P2) having in said graph for abscissa said intermediate speed (V0) and for ordinate said maximum height (H2).

11. Method according to any one of claims 1 to 10,
**characterised in that** every deployment order is stored in memory.

12. Buoyancy system (2) for aircraft (1), said buoyancy system (2) comprising at least one float (3) and a deployment means (30) for deploying each float (3), said buoyancy system (2) having an arming means (5) for activating the deployment means (30) of each float (3), said buoyancy system (2) having at least two immersion sensors (20) for giving an order for automatic deployment of each float (3) to the deployment means (30),
**characterised in that** said arming means (5) being activated only manually, said deployment means (30) being provided with a memory (31) containing a pre-established list of events, said deployment means (30) deploys each float (3) when one of said events occurs, said deployment means (30) comprising a delay means (32) for delaying the deployment of each float (3) when the deployment means (30) receives an order for deployment of each float (3) coming from a single immersion sensor (20), said list comprising at least said following events:
- said two immersion sensors (20) signal an immersion to the deployment means by sending said deployment order thereto,
- the deployment means (30) remains activated at the end of a predetermined time, said predetermined time elapsing when a single immersion sensor (20) signals an immersion by sending said deployment order.

13. Buoyancy system according to claim 12,
**characterised in that** said buoyancy system (2) having a manual means for giving an order for deployment of said float (3) to the deployment means (30) on manual request by a person, the delay means (32) delaying the deployment of each float (3) when the deployment means (30) receives an order for deployment of each float (3) coming from a single immersion sensor (20) or from a manual means (10) operated a number of times less than a predetermined threshold, said list comprises the following events:
- said two immersion sensors (20) signal an immersion to the deployment means by sending said deployment order thereto,
- the deployment means (30) remains activated at the end of a predetermined time, said predetermined time elapsing when a single immersion sensor (20) signals an immersion by sending said deployment order,
- a person operates said manual means (10) repeatedly to send said deployment order by requesting it a number of times greater than or to equal to a predetermined threshold, said threshold being greater than one,
- the deployment means (30) remains activated at the end of a predetermined time, said predetermined time elapsing when a person operates said manual means (10) to send said deployment order by requesting it a number of times less than said threshold.

14. Buoyancy system according to claim 12,
**characterised in that** it comprises a signalling means (70) for signalling to a person the presence of an order for deployment of each float (3) reaching said deployment means (30), said signalling means (70) co-operating with said deployment means (30).

15. Buoyancy system according to claim 12,
**characterised in that** it comprises a first measurement means (40) for measuring the height (H) of said aircraft (1) and a second measurement means (50) for measuring the forward speed (V) of said aircraft (1) co-operating with said deployment means (30), said deployment means (30) preventing a deployment of each float (3):
- when the deployment means (30) receives an order for deployment of each float (3) coming from a single immersion sensor (20) or from a manual means (10) operated a number of times less than a predetermined threshold, and
- when the aircraft (1) is outside a predetermined flight domain (60) defined by the height (H) and the forward speed (V) of the aircraft (1).

16. Aircraft,
**characterised in that** it comprises a buoyancy system (2) according to any one of claims 12 to 15.
